# FASCICULE DE BREVET EUROPEEN

(11) **EP 4 157 677 B1**
(45) Date de publication et mention de la délivrance du brevet: **17.07.2024**
(21) Numéro de dépôt: 21732396.3
(22) Date de dépôt: 27.04.2021
(51) Int. Cl.: B60R 11/02, B60R 21/04, B60H 1/00, B62D 25/14, B60R 11/00

(54) **IMPLANTATION D'UN HAUT-PARLEUR ET/OU D'UN SYSTÈME D'APPEL D'URGENCE AUTOMATIQUE DANS LA PLANCHE DE BORD D'UN VÉHICULE AUTOMOBILE**
EINBAU EINES LAUTSPRECHERS UND/ODER EINES AUTOMATISCHEN NOTRUFSYSTEMS IN DAS ARMATURENBRETT EINES KRAFTFAHRZEUGS
INSTALLATION OF A LOUDSPEAKER AND/OR AN AUTOMATIC EMERGENCY CALL SYSTEM IN THE DASHBOARD OF A MOTOR VEHICLE

(30) Priorité: 25.05.2020 FR 2005523
(43) Date de publication de la demande: 05.04.2023
(73) Titulaire: Stellantis Auto SAS, 78300 Poissy (FR)
(72) Inventeur: HERMEN, Frederic, 25200 MONTBELIARD (FR); COMBEAU, Frederic, 25750 DESANDANS (FR)
(86) Numéro de dépôt international: PCT/FR2021/050730
(87) Numéro de publication internationale: WO 2021/240083

(56) Documents cités:
- EP-A1- 0 713 798
- EP-A1- 2 214 417
- WO-A1-2011/010053
- CN-U- 206 264 799
- DE-A1- 102016 208 977
- JP-A- 2001 310 653
- JP-A- 2002 186 077
- JP-A- 2015 224 855
- JP-A- 2018 016 144
- JP-A- H01 240 341
- JP-A- H11 180 187
- JP-U- S57 143 909
- US-A- 4 032 725
- US-A- 5 709 601
- US-A- 5 959 364
- US-A1- 2011 176 689
- US-A1- 2011 176 702
- US-A1- 2011 181 066

## Description

L'invention se situe dans le domaine des véhicules automobiles pouvant être équipés d'un haut-parleur et/ou d'un système d'appel d'urgence automatique disposé au niveau de la planche de bord. L'invention s'adresse en particulier au système de montage d'un tel haut-parleur et/ou d'un tel système d'appel d'urgence automatique.

Les systèmes d'appels d'urgence automatique, ou « e-Call », permettent à une voiture accidentée d'appeler instantanément les services d'urgence via un réseau de téléphone mobile et d'envoyer sa position précise, que les occupants du véhicule soient conscients ou non. Les systèmes d'appels d'urgence automatique sont implantés dans les véhicules destinés au marché européen, et dans certains des véhicules destinés à d'autres marchés. Ils ne sont donc pas implantés dans tous les véhicules produits.

Le document DE102016208977 décrit le montage d'un module de type « e-Call » sur la planche de bord d'un véhicule automobile. Le montage s'effectue par un support de montage dédié comprenant une partie de maintien (pour maintenir une unité de commande) et une partie de montage connectée à la partie de maintien de telle sorte que la partie de montage soit courbée vers le haut ou vers le bas à partir de la partie de maintien.

Les documents US5709601, US2011/176689, et EP0713798 décrivent des planches de bord de véhicule comportant un conduit de dégivrage, et le document JP2002186077 décrit un agencement de fixation d'un haut-parleur. Le document JP2001310653 décrit un agencement de fixation d'un haut-parleur sur une planche de bord comportant un conduit de dégivrage conforme au préambule de la revendication 1.

Il est également connu que le support d'un haut-parleur central et/ou d'un système d'appel d'urgence automatique soit porté par un support monté sur le conduit de dégivrage associé à la planche de bord ou venu de matière avec ce dernier.

Les conduits de dégivrage sont connus de l'homme du métier, par exemple, le document WO2011/010053 décrit une architecture de planche de bord destinée à être placée sous le pare-brise d'un véhicule automobile. La planche de bord comprend un panneau et une traverse inférieure espacée de ce panneau. Un ensemble est disposé entre les deux qui comprend notamment une ouverture de raccordement avec un dispositif de climatisation et un conduit de dégivrage qui s'étend sous le pare-brise et qui est relié à ladite ouverture.

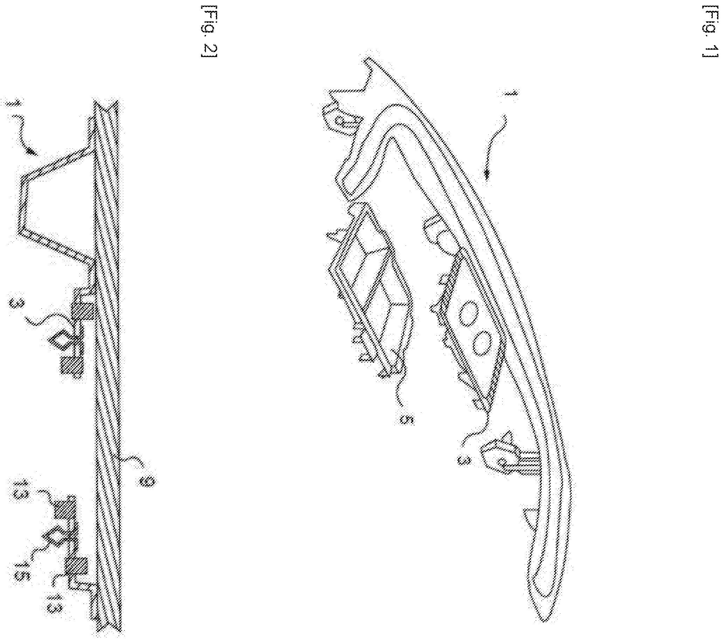

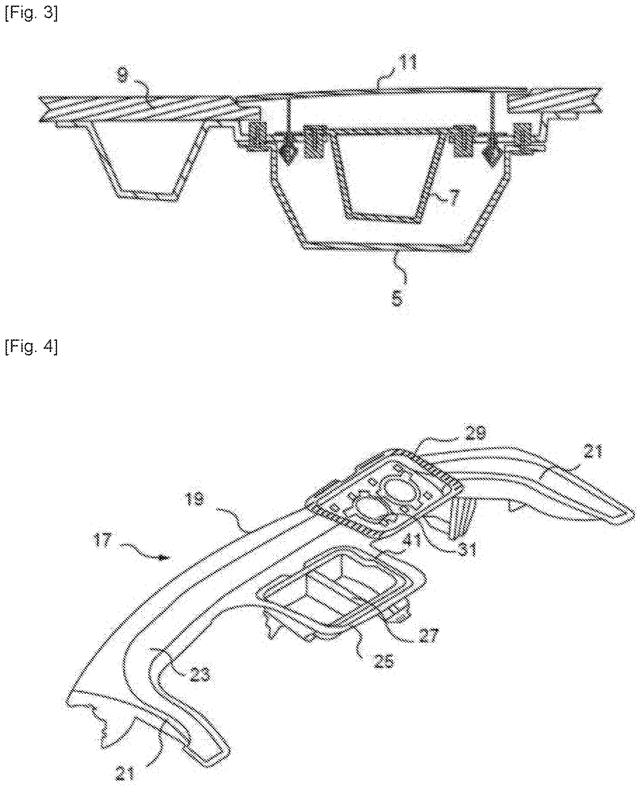

Il est maintenant fait référence aux figures 1 à 3. La figure 1 montre un conduit de dégivrage 1 comprenant un support 3 pour un équipement, par exemple pour un haut-parleur 7 (visible en figure 3) et/ou un système d'appel d'urgence automatique (non représenté). Le support 3 est venu de matière avec le corps du conduit de dégivrage 1. L'ensemble est moulé d'une seule pièce par exemple par injection, en un matériau composite ou thermoplastique.

Le support 3 va donc porter le haut-parleur 7 mais également le bol 5 de haut-parleur dans lequel est inséré ledit haut-parleur 7. Le haut-parleur 7 et le bol 5 de haut-parleur associé ne sont pas présents sur tous les véhicules, mais sont installés seulement sur une partie de la gamme associée à une silhouette donnée. En fonction de la présence ou non d'un haut-parleur 7, le panneau 9 de la planche de bord présente ou non une ouverture destinée à recevoir une grille 11 de haut-parleur.

Le montage du haut-parleur 7 et de son bol 5 associé se fait généralement après une opération de fixation du conduit de dégivrage 1 sur le panneau 9 du tableau de bord. Cette opération de fixation est, par exemple, une opération de soudage par ultrason ou vibration. Ainsi, lors de la préparation du conduit de dégivrage 1, il n'est pas possible de savoir si ledit conduit de dégivrage 1 va être associé à un panneau 9 de planche de bord montrant une ouverture ou non. C'est pourquoi les moyens de fixation et/ou de clippage (13, 15) du bol de haut-parleur et du haut-parleur sont montés par défaut sur le conduit de dégivrage 1. La figure 2 est une vue en coupe d'un ensemble comprenant un panneau 9 de la planche de bord soudé à un conduit de dégivrage 1 destiné à un véhicule exempt de haut-parleur en voie centrale. On peut voir que les moyens de fixation du bol et du haut-parleur, tels que des écrous de blocage 13 et des moyens de clippage 15 sont présents bien qu'inutilisés.

Pour des raisons d'économies d'échelle, il serait intéressant de pouvoir s'affranchir d'un montage de moyens de fixation et/ou de clippage (13, 15) lorsque cela n'est pas nécessaire, sans pour autant avoir à mettre en oeuvre plusieurs références de conduits de dégivrage 1 en fonction de la gamme du véhicule qui les reçoit, notamment du fait du caractère volumineux de ces derniers.

L'invention propose d'apporter une réponse à au moins un des inconvénients et/ou problèmes rencontrés dans l'art antérieur. L'invention a pour objectif de proposer une solution pour adapter une planche de bord au montage d'un haut-parleur central et/ou d'un système d'appel d'urgence automatique qui soit simple et économique ; et qui de préférence soit plus robuste que les solutions connues.

A cet effet et selon un premier aspect, l'invention a pour objet un conduit de dégivrage pour véhicule automobile, ledit conduit de dégivrage comprenant un corps montrant une goulotte et étant destiné à être fixé à un panneau de planche de bord, le conduit de dégivrage est remarquable en ce qu'il comprend au moins un bol de haut-parleur et en ce qu'au moins un bol de haut-parleur est venu de matière avec ledit corps. Le ou les bols de haut-parleur montrent une ouverture et le conduit de dégivrage est réalisé en un matériau thermoplastique ou en un matériau composite avec une matrice thermoplastique. Au moins un bol de haut-parleur comprend un rebord formant le pourtour de l'ouverture du bol de haut-parleur. Ledit rebord montre une série de nervures destinées à la fixation dudit bol de haut-parleur sur un panneau de planche de bord par soudage par ultrason ou vibration.

Comme on l'aura compris à la lecture de la définition qui vient d'en être donnée, l'invention consiste à faire porter au conduit de dégivrage le bol de haut-parleur au lieu du support de haut-parleur. Puisque les moyens de fixation du haut-parleur et de la grille de haut-parleur sont portés par le support de haut-parleur et non pas par le bol de haut-parleur, ces fixations ne seront pas présentes par défaut lorsque la planche de bord n'est pas équipée d'un haut-parleur. Le support de haut-parleur sera ajouté sur le conduit de dégivrage au moment de la fixation du panneau de planche de bord sur le conduit de dégivrage mais uniquement lorsque c'est nécessaire, c'est-à-dire lorsque le panneau de planche de bord montre une ouverture destinée au haut-parleur ou à un système d'appel d'urgence automatique. Aussi, cette configuration est avantageuse en ce que le bol de haut-parleur en lui-même est fixé par soudage sur le panneau de planche de bord, rendant l'ensemble plus robuste. L'invention est remarquable en ce qu'elle offre une réponse simple et économique à la problématique posée.

Selon un mode de réalisation, au moins un bol de haut-parleur comprend au moins une cloison de séparation interne agencée pour le diviser en au moins deux compartiments. Cette configuration permet au bol de haut-parleur de recevoir au moins deux dispositifs acoustiques choisis parmi au moins un haut-parleur et/ou un système d'appel d'urgence automatique.

Selon un mode de réalisation, au moins un bol de haut-parleur comprend au moins une interface de fixation pour la fixation d'un support de haut-parleur.

De préférence, au moins une interface de fixation comprend des moyens de clippage destinés à coopérer avec des moyens de clippage complémentaires portés par le support de haut-parleur.

Avantageusement, au moins une interface de fixation est disposée sur un épaulement périphérique agencé dans le bol de haut-parleur. De préférence, l'épaulement périphérique est contenu dans le bol de haut-parleur, c'est-à-dire que l'épaulement périphérique est disposé inférieur au rebord du bol de haut-parleur destiné à sa fixation au panneau de la planche de bord.

R4 Selon un deuxième aspect, l'invention a pour objet un

Selon un deuxième aspect, l'invention concerne un ensemble remarquable en ce qu'il comprend un conduit de dégivrage selon le premier aspect et un support de haut-parleur. Le support de haut-parleur est destiné à être fixé sur le conduit de dégivrage et se présente sous forme d'une platine montrant au moins une ouverture, et comprenant au moins une interface de fixation ou des moyens de fixation à un bol de haut-parleur porté par ledit conduit de dégivrage.

De préférence, la platine montre au moins deux ouvertures et/ou les moyens de fixation au bol de haut-parleur sont des moyens de clippage.

De préférence, la platine montre une face supérieure et une face inférieure et les moyens de clippage se présentent sous forme d'au moins un élément mâle s'élevant en saillie depuis la face inférieure de la platine.

Selon un mode de réalisation ; le support de haut-parleur comprend en outre des moyens de clippage pour la fixation d'une grille de haut-parleur. De préférence, les moyens de clippage pour la fixation d'une grille de haut-parleur comprennent au moins une douille de clippage destinée à recevoir un pied de clippage porté par la grille de haut-parleur.

Selon un mode de réalisation ; le support de haut-parleur comprend en outre des moyens de fixation destinés à la fixation d'un haut-parleur et/ou d'un système d'appel d'urgence automatique. De préférence, les moyens de fixation pour la fixation d'un haut-parleur et/ou d'un système d'appel d'urgence automatique comprennent au moins un écrou de blocage.

Selon un mode de réalisation ; la platine montrant une face supérieure et une face inférieure, le support de haut-parleur est remarquable en ce qu'il comprend un épaulement périphérique s'élevant depuis la face supérieure de la platine. De préférence, le support de haut-parleur est réalisé en un matériau thermoplastique ou en un matériau composite avec une matrice thermoplastique et l'épaulement périphérique montre une série de nervures destinées à la fixation dudit support de haut-parleur sur un panneau de planche de bord par soudage par ultrason ou vibration.

Selon un troisième aspect, l'invention concerne une planche de bord avec un panneau de planche de bord, remarquable en ce que le panneau de planche de bord est fixé à un conduit de dégivrage selon le premier aspect ou à un ensemble selon le troisième aspect.

Selon un quatrième aspect, l'invention concerne un véhicule automobile remarquable en ce qu'il comprend une planche de bord avec un panneau de planche de bord, remarquable en ce que le panneau de planche de bord est fixé à un conduit de dégivrage selon le premier aspect ou à un ensemble selon le troisième aspect.

Par exemple, l'invention concerne un véhicule automobile remarquable en ce qu'il comprend une planche de bord selon le quatrième aspect.

Selon un cinquième aspect, l'invention concerne un procédé de montage d'une planche de bord selon le quatrième aspect, ou une planche de bord pour véhicule automobile selon le cinquième aspect, le procédé comprenant une étape de fixation d'un conduit de dégivrage sur un panneau de planche de bord ; le procédé étant remarquable en ce que le conduit de dégivrage est selon le premier aspect et en ce que lorsque le panneau de planche de bord montre une ouverture en regard d'un bol de haut-parleur porté par ledit de dégivrage, le procédé comprend une étape de fixation d'un support de haut-parleur sur ledit bol de haut-parleur réalisée préalablement à l'étape de fixation d'un conduit de dégivrage sur un panneau de planche de bord.

Selon une mise en oeuvre de l'invention, l'étape de fixation d'un conduit de dégivrage sur un panneau de planche de bord est réalisée par soudage par ultrason ou vibration.

Selon une mise en oeuvre de l'invention, l'étape de fixation d'un support de haut-parleur sur ledit bol de haut-parleur se fait par clippage.

Selon une mise en oeuvre de l'invention, le procédé comprend en outre une étape de fixation d'un système d'appel d'urgence automatique et/ou d'un haut-parleur sur ledit support de haut-parleur réalisée postérieurement à l'étape de fixation d'un conduit de dégivrage sur un panneau de planche de bord.

De manière préférentielle, le procédé comprend en outre une étape de fixation d'une grille de haut-parleur sur ledit support de haut-parleur réalisée postérieurement à l'étape de fixation d'un système d'appel d'urgence automatique et/ou d'un haut-parleur sur ledit support de haut-parleur.

Selon un septième aspect, l'invention concerne l'utilisation d'un conduit de dégivrage selon le premier aspect et/ou d'un ensemble selon le troisième aspect pour le montage d'un système d'appel d'urgence automatique et/ou d'un haut-parleur dans un véhicule automobile ; de préférence dans un véhicule automobile selon le cinquième aspect.

Par exemple, l'invention concerne l'utilisation d'un conduit de dégivrage selon le premier aspect et/ou d'un ensemble selon le troisième aspect pour le montage d'un système d'appel d'urgence automatique et/ou d'un haut-parleur dans une planche de bord selon le quatrième aspect.

L'invention sera bien comprise et d'autres aspects et avantages apparaîtront clairement à la lecture de la description qui suit donnée à titre d'exemple et en références aux figures annexées sur lesquelles :
[Fig.1] La figure 1 est une vue en perspective d'un conduit de dégivrage selon l'art antérieur et son bol de haut-parleur associé.
[Fig. 2] La figure 2 est une vue simplifiée en coupe selon la direction transversale d'une planche de bord selon l'art antérieur dépourvue de haut-parleur.
[Fig. 3] La figure 3 est une vue simplifiée en coupe selon la direction transversale d'une planche de bord selon l'art antérieur avec un haut-parleur.
[Fig.4] La figure 4 est une vue en perspective d'un conduit de dégivrage selon l'invention et son support de haut-parleur associé.
[Fig.5] La figure 5 est une vue en perspective d'un support de haut-parleur monté dans le bol de haut-parleur d'un conduit de dégivrage selon l'invention.
[Fig. 6] La figure 6 est une vue simplifiée en coupe selon la direction transversale d'une planche de bord selon l'invention dépourvue de haut-parleur.
[Fig. 7] La figure 7 est une vue simplifiée en coupe selon la direction transversale d'une planche de bord selon l'invention avec un haut-parleur.

Dans la description qui suit, le terme « comprendre » est synonyme de « inclure » et n'est pas limitatif en ce qu'il autorise la présence d'autres éléments dans le conduit de dégivrage, le support de haut-parleur, la planche de bord ou le véhicule ou d'autres étapes dans le procédé auquel il se rapporte. Il est entendu que le terme « comprendre » inclut les termes « consister en ». Les termes « haut » et « bas » s'entendront dans leur sens général, le terme « bas » désignant une proximité avec le sol plus importante. Sur les différentes figures, les mêmes références désignent des éléments identiques ou similaires.

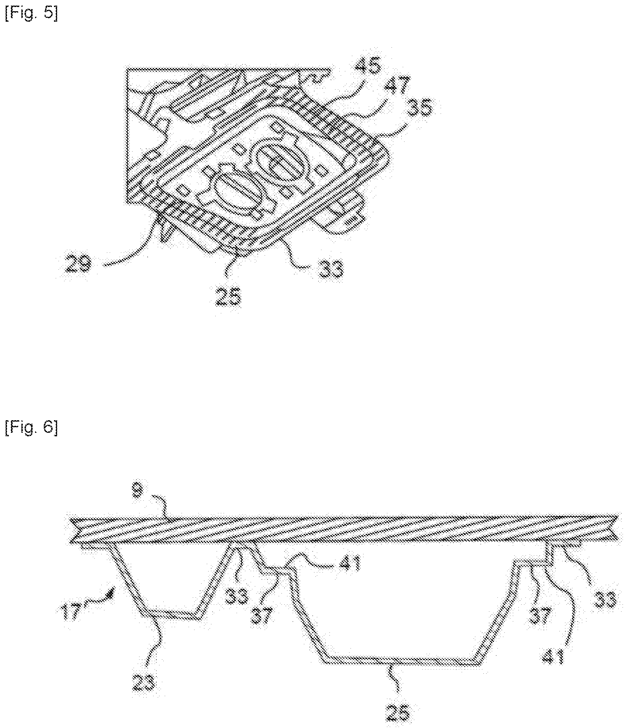

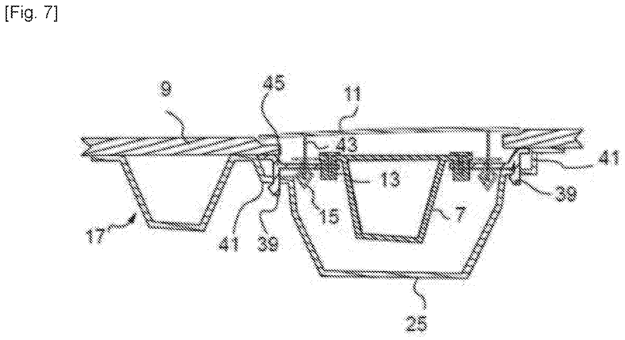

Les figures 1 à 3 ayant été décrites en partie introductive, on se référera à présent à la figure 4 illustrant un conduit de dégivrage 17 selon l'invention destiné à être implanté sous le pare-brise avant d'un véhicule automobile. Le conduit de dégivrage 17 comprend un corps avec une forme générale en U montrant une partie centrale 19 et deux parties latérales 21, ledit corps en forme de U étant configuré pour être ouvert en direction de l'arrière du véhicule automobile lorsque le conduit de dégivrage 17 est monté dans un véhicule automobile. Le corps du conduit de dégivrage 17 est destiné à être fixé à un panneau 9 de planche de bord (visible sur les figures 6 et 7) et montre une goulotte 23 s'étendant selon toute la longueur du corps et étant destinée à être reliée à un dispositif de climatisation (non représenté). La goulotte 23 est ouverte en direction du haut et est destinée à coopérer avec le panneau 9 de planche de bord pour former un canal de distribution d'air en vue du dégivrage du pare-brise du véhicule.

Le conduit de dégivrage 17 selon l'invention est remarquable en ce qu'il comprend au moins un bol 25 de haut-parleur et en ce qu'au moins un bol 25 de haut-parleur est venu de matière avec ledit corps. Le ou les bols 25 de haut-parleur montrent une ouverture, ouverte en direction du haut. De préférence, et comme illustré sur la figure 4, au moins un bol 25 de haut-parleur est agencé au niveau la partie centrale 19 dudit corps de manière à être placé entre les deux parties latérales 21, c'est-à-dire à l'intérieur dudit U. Ainsi, au moins un bol 25 de haut-parleur est venu de matière avec la partie centrale 19 dudit corps. Le ou les bols 25 de haut-parleur s'étendent en saillie depuis le corps du conduit de dégivrage 17.

Selon un mode de réalisation préférentiel, au moins un bol 25 de haut-parleur comprend au moins une cloison 27 de séparation interne agencée pour le diviser en au moins deux compartiments. Ainsi, le bol 25 de haut-parleur peut être utilisé pour au moins deux dispositifs acoustiques montés adjacents tels qu'un haut-parleur et un système d'appel d'urgence automatique (non représentés en figures 4 et 5). Le support 29 de haut-parleur associé comprendra au moins une ouverture 31 destinée à être en regard d'un des compartiments ; par exemple, une seule ouverture si un seul des compartiments est destiné à être utilisé. De préférence, le support 29 de haut-parleur associé comprendra au moins deux ouvertures 31 chacune étant destinée à être en regard d'un des compartiments.

Le conduit de dégivrage 17 est préférentiellement réalisé en un matériau thermoplastique ou en un matériau composite avec une matrice thermoplastique. Par exemple, l'homme du métier aura avantage à sélectionner le matériau thermoplastique ou la matrice thermoplastique du matériau composite parmi le polypropylene (PP), le polyethylene (PE), le polyphtalamide (PPA), le polyetherethercétone (PEEK), polysulfure de phénylène (PPS), le polyamide-imide (PAI), le polyetherimide (PEI), le polyarylamide (PAA), ou le polyamide (PA) tel que par exemple du polyamide 6 (PA 6 ou polycaprolactame) ou du polyamide 6.6 (PA 6.6 ou polyhexaméthylène adipamide), ou leurs mélanges. De préférence, le matériau thermoplastique ou la matrice thermoplastique du matériau composite est du polypropylène ou du polyamide.

Selon l'invention, le conduit de dégivrage 17 est assemblé avec le panneau 9 de planche de bord par soudage par ultrason ou vibration. Le soudage par ultrason ou vibration est une technique connue de l'homme du métier qui ne sera donc pas décrite en détail dans le présent mémoire. On se contentera de préciser qu'il s'agit d'une technique d'assemblage par soudage de pièces en matériau thermoplastique montrant un point de fusion donné. Avantageusement, les pièces à assembler montrent chacune une série de nervures au niveau de leurs interfaces de fixation respectives. Des vibrations haute-fréquence sont envoyées aux pièces à assembler par le biais d'un outil vibrant. Sous l'effet de la chaleur engendrée par les vibrations, les nervures vont fondre et les matériaux des différentes pièces vont fusionner au niveau des interfaces de fixation. La soudure est ainsi réalisée.

Conformément à l'invention, le ou les bols 25 de haut-parleur étant ouverts en direction du haut, donc en regard du panneau 9 de planche de bord, au moins un bol 25 de haut-parleur comprend un rebord 33 formant le pourtour de l'ouverture du bol 25 de haut-parleur. Ce rebord 33 forme une interface de fixation du bol 25 de haut-parleur avec le panneau 9 de planche de bord. Conformément à l'invention, le rebord 33 périphérique du bol de haut-parleur montre une série de nervures 35 destinées à la fixation dudit bol 25 de haut-parleur sur un panneau 9 de planche de bord par soudage par ultrason ou vibration.

Selon un mode de réalisation, au moins un bol 25 de haut-parleur comprend au moins une interface de fixation pour la fixation d'un support 29 de haut-parleur. De préférence, au moins une interface de fixation comprend des moyens de clippage 37 destinés à coopérer avec des moyens de clippage 39 complémentaires portés par le support 29 de haut-parleur. Par exemple, au moins une interface de fixation comprend un ajour 37 pour le passage d'un clip de fixation formant un moyen de clippage 39 porté par le support 29 de haut-parleur.

Selon un mode de réalisation préféré de l'invention, au moins une interface de fixation pour la fixation d'un support 29 de haut-parleur est disposée sur un épaulement 41 périphérique agencé dans le bol 25 de haut-parleur. De préférence, l'épaulement périphérique est contenu dans le bol de haut-parleur, c'est-à-dire que l'épaulement périphérique est disposé inférieur au rebord du bol de haut-parleur destiné à sa fixation au panneau de la planche de bord. Ainsi, le support 29 de haut-parleur est avantageusement contenu au moins en partie et de préférence dans son intégralité dans le bol 25 de haut-parleur. La fixation par clippage est avantageuse en ce qu'elle ne nécessite pas d'outil est peut donc être réalisée facilement au moment de l'assemblage des différentes pièces en vue de leur soudure. L'homme du métier peut néanmoins effectuer cette fixation par d'autres moyens.

Ainsi, le support 29 de haut-parleur destiné à être fixé sur un conduit de dégivrage 17 se présente préférentiellement sous forme d'une platine montrant au moins une ouverture 31 et comprend au moins une interface de fixation ou des moyens de fixation et/ou de clippage 39 à un bol 25 de haut-parleur porté par ledit conduit de dégivrage 17. De préférence, la platine montre au moins deux ouvertures 31. Avantageusement, les moyens de fixation et/ou de clippage 39 au bol de haut-parleur sont des moyens de clippage 39. La platine montrant une face supérieure et une face inférieure, les moyens de clippage 39 se présentent avantageusement sous forme d'au moins un élément mâle s'élevant en saillie depuis la face inférieure de la platine.

Comme on l'aura compris, les moyens de fixation du ou des dispositifs acoustiques et de la grille 11 de haut-parleur sont portés par le support 29 de haut-parleur. Ils ne seront donc pas présents par défaut sur tous les modèles de véhicule mais seront présent uniquement lorsqu'ils sont nécessaires.

Ainsi, avantageusement, le support 29 de haut-parleur selon l'invention comprend des moyens de clippage 15 pour la fixation par clippage d'une grille 11 de haut-parleur. De préférence, lesdits moyens de clippage 15 comprennent au moins une douille de clippage destinée à recevoir un pied 43 de clippage porté par la grille 11 de haut-parleur. La douille de clippage est orientée pour être ouverte vers le haut, le clippage se faisant par enfoncement du ou des pieds 43 de clippage de la grille 11 de haut-parleur dans la ou les douilles de clippage du support de haut-parleur.

De même, le support 29 de haut-parleur selon l'invention comprend avantageusement des moyens de fixation 13 destinés à la fixation d'un haut-parleur et/ou d'un système d'appel d'urgence automatique. De préférence, les moyens de fixation 13 pour la fixation d'un haut-parleur et/ou d'un système d'appel d'urgence automatique comprennent au moins un écrou de blocage. Le ou les écrous de blocage sont agencés pour être ouverts vers le haut de manière à être accessibles au travers de l'ouverture montrée par le panneau 9 de planche de bord.

Préférentiellement, la fixation par clippage du support 29 de haut-parleur est une fixation temporaire dite « de maintien ». La fixation définitive se fait par soudage par ultrason ou vibration. Cette configuration est avantageuse en termes de robustesse de l'ensemble et pour éviter la génération de bruits parasites en provenance de vibrations lors du roulage du véhicule.

Ainsi, selon une mise en oeuvre préférée, la platine montrant une face supérieure et une face inférieure, le support 29 de haut-parleur comprend un épaulement 45 périphérique s'élevant depuis la face supérieure de la platine. Cet épaulement 45 périphérique forme une interface de fixation du support 29 de haut-parleur avec le panneau 9 de planche de bord. A cette fin, l'homme du métier aura avantage à ce que l'épaulement 45 périphérique du support 29 de haut-parleur montre une série de nervures 47 destinées à la fixation dudit support 29 de haut-parleur sur un panneau 9 de planche de bord par soudage par ultrason ou vibration.

On notera que dans ses modes de réalisation préférés, l'invention est remarquable en ce que la soudure par ultrason ou vibration va souder entre-elles au moins trois pièces, à savoir le panneau 9 de planche de bord, le conduit de dégivrage 17 incluant son ou ses bols 25 de haut-parleur et le ou les supports 29 de haut-parleur. La planche de bord ainsi formée est plus robuste que celles de l'art antérieur dans lesquelles le bol de haut-parleur était assemblé par vissage et non pas par soudage. La suppression des opérations de vissage associées ajoute encore aux économies engendrées par l'invention.

Ainsi, selon un mode de réalisation préféré, le support 29 de haut-parleur est réalisé en un matériau thermoplastique ou en un matériau composite avec une matrice thermoplastique. Par exemple, le support 29 de haut-parleur est réalisé dans le même matériau que le conduit de dégivrage 17. De préférence, l'épaulement 45 périphérique montre une série de nervures 47 destinées à la fixation dudit support 29 de haut-parleur sur un panneau 9 de planche de bord par soudage par ultrason ou vibration.

L'invention concerne aussi un procédé de montage d'une planche de bord pour véhicule selon l'invention, le procédé de montage impliquant un conduit de dégivrage 17 selon l'invention, c'est-à-dire comprenant un corps avec une goulotte 23 et au moins un bol 25 de haut-parleur venu de matière avec ledit corps. Le procédé comprend les étapes suivantes, données dans un ordre chronologique : l'approvisionnement d'un panneau 9 de planche de bord et d'un conduit de dégivrage 17 selon l'invention. La détermination de la présence ou non d'une ouverture sur le panneau 9 de planche de bord destinée à être positionnée en regard d'un bol 25 de haut-parleur porté par ledit conduit de dégivrage 17. Lorsque le panneau 9 de planche de bord ne montre pas d'ouverture, une étape de fixation du conduit de dégivrage 17 sur le panneau 9 de planche de bord est directement mise en oeuvre. Lorsque le panneau 9 de planche de bord montre au moins une ouverture, le procédé comprend une étape supplémentaire de fixation d'un support 29 de haut-parleur sur le ou les bols 25 de haut-parleur destinés à être positionnés en regard de la ou des ouvertures préalablement à l'étape de fixation du conduit de dégivrage 17 sur le panneau 9 de planche de bord. Le support 29 de haut-parleur fixé est préférentiellement dimensionné pour être contenu dans le bol 25 de haut-parleur. De préférence, l'étape de fixation d'un support 29 de haut-parleur sur un bol 25 de haut-parleur se fait par clippage.

Qu'un support 29 de haut-parleur soit fixé ou non à un bol 25 de haut-parleur, l'homme du métier aura avantage à ce que l'étape de fixation du conduit de dégivrage 17 sur le panneau 9 de planche de bord soit réalisée par soudage par ultrason ou vibration.

Lorsque le panneau 9 de planche de bord est soudé avec le conduit de dégivrage 17 et avec un ou plusieurs supports 29 de haut-parleur, le procédé de montage se poursuit avec la mise en oeuvre d'une étape de fixation d'un système d'appel d'urgence automatique et/ou d'un haut-parleur 7 sur ledit support de haut-parleur. Cette fixation se fait avantageusement par vissage. Puis le procédé met en oeuvre une étape de fixation d'une grille 11 de haut-parleur sur ledit support de haut-parleur. La fixation de la grille 11 de haut-parleur se fait avantageusement par clippage.

## Revendications

1. Conduit de dégivrage (17) pour véhicule automobile, ledit conduit de dégivrage (17) comprenant un corps montrant une goulotte (23) et étant destiné à être fixé à un panneau (9) de planche de bord, le conduit de dégivrage (17) comprenant au moins un bol (25) de haut-parleur montrant une ouverture, au moins un bol (25) de haut-parleur est venu de matière avec ledit corps, le conduit de dégivrage (17) est **caractérisé en ce qu'**il est réalisé en un matériau thermoplastique ou en un matériau composite avec une matrice thermoplastique et **en ce qu'**au moins un bol (25) de haut-parleur comprend un rebord (33) formant le pourtour de l'ouverture du bol (25) de haut-parleur ; ledit rebord (33) montrant une série de nervures (35) destinées à la fixation dudit bol (25) de haut-parleur sur un panneau (9) de planche de bord par soudage par ultrason ou vibration ; de préférence, au moins un bol (25) de haut-parleur comprend au moins une cloison (27) de séparation interne agencée pour le diviser en au moins deux compartiments.

2. Conduit de dégivrage (17) selon l'une des revendications 1 **caractérisé en ce qu'**au moins un bol (25) de haut-parleur comprend au moins une interface de fixation pour la fixation d'un support (29) de haut-parleur ; de préférence, au moins une interface de fixation comprend des moyens de clippage (37) destinés à coopérer avec des moyens de clippage (39) complémentaires portés par le support (29) de haut-parleur et/ou au moins une interface de fixation est disposée sur un épaulement (41) périphérique agencé dans le bol (25) de haut-parleur.

3. Ensemble comprenant un conduit de dégivrage (17) selon l'une des revendications 1 à 2 et un support (29) de haut-parleur destiné à être fixé sur ledit conduit de dégivrage (17), le support (29) se présentant sous forme d'une platine montrant au moins une ouverture (31) et comprenant au moins une interface de fixation ou des moyens de fixation à un bol (25) de haut-parleur porté par ledit conduit de dégivrage (17) ; de préférence, la platine montre au moins deux ouvertures (31) et/ou les moyens de fixation au bol (25) de haut-parleur sont des moyens de clippage.

4. Ensemble suivant la revendication précédente, comprenant en outre des moyens de clippage (15) pour la fixation d'une grille (11) de haut-parleur et/ou en ce qu'il comprend en outre des moyens de fixation (13) destinés à la fixation d'un haut-parleur et/ou d'un système d'appel d'urgence automatique ; de préférence les moyens de fixation (13) pour la fixation d'un haut-parleur et/ou d'un système d'appel d'urgence automatique comprennent au moins un écrou de blocage (13).

5. Ensemble suivant l'une des revendications 3 ou 4, dont la platine montre une face supérieure et une face inférieure, le support (29) comprenant un épaulement (45) périphérique s'élevant depuis la face supérieure de la platine ; de préférence, le support (29) de haut-parleur est réalisé en un matériau thermoplastique ou en un matériau composite avec une matrice thermoplastique et l'épaulement périphérique (45) montre une série de nervures (47) destinées à la fixation dudit support (29) de haut-parleur sur un panneau (9) de planche de bord par soudage par ultrason ou vibration

6. Véhicule automobile **caractérisé en ce qu'**il comprend une planche de bord avec un panneau (9) de planche de bord **caractérisé en ce que** le panneau (9) de planche de bord est fixé à un conduit de dégivrage (17) selon l'une des revendications 1 à 2 ou à un ensemble selon l'une des revendications de 3 à 5.

7. Procédé de montage d'une planche de bord pour véhicule automobile selon la revendication 6, le procédé comprenant une étape de fixation d'un conduit de dégivrage (17) sur un panneau (9) de planche de bord ; le procédé étant **caractérisé en ce que** le conduit de dégivrage (17) est selon l'une des revendications 1 à 2 et **en ce que** lorsque le panneau (9) de planche de bord montre une ouverture en regard d'un bol (25) de haut-parleur porté par ledit conduit de dégivrage (17), le procédé comprend une étape de fixation d'un support (29) de haut-parleur sur ledit bol (25) de haut-parleur réalisée préalablement à l'étape de fixation d'un conduit de dégivrage (17) sur un panneau (9) de planche de bord, , l'étape de fixation du conduit de dégivrage (17) sur le panneau (9) de planche de bord étant réalisée par soudage par ultrason ou vibration.

8. Procédé selon la revendication 7 **caractérisé en ce qu'**il comprend en outre une étape de fixation d'un système d'appel d'urgence automatique et/ou d'un haut-parleur (7) sur ledit support (29) de haut-parleur réalisée postérieurement à l'étape de fixation d'un conduit de dégivrage (17) sur un panneau (9) de planche de bord ; de préférence, il comprend en outre une étape de fixation d'une grille (11) de haut-parleur sur ledit support (29) de haut-parleur réalisée postérieurement à l'étape de fixation d'un système d'appel d'urgence automatique et/ou d'un haut-parleur (7) sur ledit support (29) de haut-parleur.

## Patentansprüche

1. Entfrostungskanal (17) für ein Kraftfahrzeug, wobei der Entfrostungskanal (17) einen Körper aufweist, der eine Rinne (23) aufweist und dazu bestimmt ist, an einer Armaturenbrettplatte (9) befestigt zu werden, wobei der Entfrostungskanal (17) mindestens eine Lautsprecherschale (25) aufweist, die eine Öffnung aufweist, wobei mindestens eine Lautsprecherschale (25) mit dem Körper einstückig ausgebildet ist, wobei der Entfrostungskanal (17) **dadurch gekennzeichnet ist, dass** er aus einem thermoplastischen Material oder einem Verbundmaterial mit einer Thermoplastische Matrix und **dadurch gekennzeichnet, dass** mindestens eine Lautsprecherschale (25) einen Flansch (33) aufweist, der den Umfang der Öffnung der Lautsprecherschale (25) bildet, wobei der Flansch (33) eine Reihe von Rippen (35) aufweist, die zum Befestigen der Lautsprecherschale (25) an einer Armaturenbrettplatte (9) durch Ultraschall- oder Vibrationsschweißen bestimmt sind, wobei vorzugsweise mindestens eine Lautsprecherschale (25) mindestens eine innere Trennwand (27) aufweist, die zum Teilen der Schale angeordnet ist mindestens zwei Fächer.

2. Entfrostungskanal (17) nach einem der Ansprüche 1, **dadurch gekennzeichnet, dass** mindestens eine Lautsprecherschale (25) mindestens eine Befestigungsschnittstelle zur Befestigung eines Lautsprecherträgers (29) aufweist; vorzugsweise mindestens eine Befestigungsschnittstelle Klemmmittel (37) zum Zusammenwirken mit komplementären Klemmmitteln (39) aufweist, die von dem Lautsprecherträger (29) getragen werden, und/oder mindestens eine Befestigungsschnittstelle an einer umlaufenden Schulter (41) angeordnet ist, die in der oberen Schale (25) angeordnet ist Lautsprecher.

3. Baugruppe, die eine Abtauleitung (17) nach einem der Ansprüche 1 bis 2 und einen Lautsprecherträger (29) zur Befestigung an der Abtauleitung (17) umfasst, wobei der Träger (29) in Form einer Platte vorliegt, die mindestens eine Öffnung (31) aufweist und mindestens eine Befestigungsfläche oder Mittel zur Befestigung an einer Lautsprecherschale (25) umfasst, die von der Abtauleitung (17) getragen wird; vorzugsweise zeigt die Platte mindestens zwei Öffnungen (31) und/oder Mittel zur Befestigung an der Schale (17) 25) Lautsprecher sind Cliping-Mittel.

4. Anordnung nach dem vorhergehenden Anspruch, die ferner Clipmittel (15) zur Befestigung eines Lautsprechergitters (11) aufweist und/oder die ferner Befestigungsmittel (13) zur Befestigung eines Lautsprechers und/oder eines automatischen Notrufsystems aufweist; wobei vorzugsweise die Befestigungsmittel (13) zur Befestigung eines Lautsprechers und/oder eines automatischen Notrufsystems mindestens eine Sperrmutter (13) aufweisen.

5. Anordnung nach einem der Ansprüche 3 oder 4, bei der die Platte eine Ober- und eine Unterseite aufweist, wobei der Träger (29) eine umlaufende Schulter (45) aufweist, die von der Oberseite der Platte absteht; wobei vorzugsweise der Lautsprecherhalter (29) aus einem thermoplastischen Material oder einem Verbundmaterial mit einer thermoplastischen Matrix hergestellt ist und die umlaufende Schulter (45) eine Reihe von Rippen (47) aufweist, um den Lautsprecherhalter (29) an einer Armaturenbrettplatte (9) durch Ultraschall- oder Vibrationsschweißen zu befestigen

6. Kraftfahrzeug, **dadurch gekennzeichnet, dass** es ein Armaturenbrett mit einer Armaturenbrettplatte (9) umfasst, **dadurch gekennzeichnet, dass** die Armaturenbrettplatte (9) an einem Abtaukanal (17) nach einem der Ansprüche 1 bis 2 oder an einer Anordnung nach einem der Ansprüche 3 bis 5 befestigt ist.

7. Verfahren zum Montieren eines Armaturenbretts für ein Kraftfahrzeug nach Anspruch 6, wobei das Verfahren einen Schritt des Anbringens einer Entfrostungsleitung (17) an einer Armaturenbrettplatte (9) umfasst; wobei das Verfahren **dadurch gekennzeichnet ist, dass** die Entfrostungsleitung (17) nach einem der Ansprüche 1 bis 2 ist, und dass, wenn die Armaturenbrettplatte (9) eine Öffnung gegenüber einer Lautsprecherschale (25) zeigt, die von der Entfrostungsleitung (17) getragen wird, das Verfahren einen Schritt des Anbringens einer Lautsprecherhalterung (29) umfasst Sie werden auf die Lautsprecherschale (25) aufgebracht, die vor dem Schritt der Befestigung einer Entfrostungsleitung (17) an einer Armaturenbrettplatte (9) hergestellt wird, wobei der Schritt der Befestigung der Entfrostungsleitung (17) an der Armaturenbrettplatte (9) durch Ultraschallschweißen oder Vibration erfolgt.

8. Verfahren nach Anspruch 7, **dadurch gekennzeichnet, dass** es ferner einen Schritt des Anbringens eines automatischen Notrufsystems und/oder eines Lautsprechers (7) an dem Lautsprecherträger (29) umfasst, der nach dem Schritt des Anbringens einer Abtauleitung (17) an einer Armaturenbrettplatte (9) ausgeführt wird; vorzugsweise umfasst es ferner einen Schritt des Anbringens eines Lautsprechergitters (11) an dem Lautsprecherträger (29), der nach dem Schritt des Anbringens eines automatischen und/oder automatischen Notrufsystems ausgeführt wird oder einem Lautsprecher (7) an der Lautsprecherhalterung (29).

## Claims

1. A defrosting duct (17) for a motor vehicle, said defrosting duct (17) comprising a body showing a chute (23) and being intended to be fixed to a dashboard panel (9), the defrosting duct (17) comprising at least one loudspeaker bowl (25) showing an opening, at least one loudspeaker bowl (25) is made integrally with said body, the defrosting duct (17) is **characterized in that** it is made of a thermoplastic material or of a composite material with a thermoplastic matrix and **in that** at least one loudspeaker bowl (25) comprises a rim (33) forming the periphery of the opening of the loudspeaker bowl (25); said rim (33) showing a series of ribs (35) intended for fixing said loudspeaker bowl (25) to a dashboard panel (9) by ultrasonic or vibration welding; preferably, at least one loudspeaker bowl (25) comprises at least one internal partition (27) arranged to divide it into at least two compartments.

2. Deicing duct (17) according to one of claims 1, **characterized in that** at least one loudspeaker bowl (25) comprises at least one fastening interface for fastening a loudspeaker support (29); preferably, at least one fastening interface comprises clipping means (37) intended to cooperate with complementary clipping means (39) carried by the loudspeaker support (29) and/or at least one fastening interface is arranged on a peripheral shoulder (41) arranged in the loudspeaker bowl (25) Speaker.

3. Assembly comprising a defrosting duct (17) according to one of claims 1 to 2 and a loudspeaker support (29) intended to be fixed to said defrosting duct (17), the support (29) being in the form of a plate showing at least one opening (31) and comprising at least one fixing interface or fixing means to a loudspeaker bowl (25) carried by said defrosting duct (17); preferably, the plate shows at least two openings (31) and/or the fixing means to the bowl (25)) loudspeakers are clipping means.

4. Assembly according to the preceding claim, further comprising clipping means (15) for fixing a loudspeaker grille (11) and/or in that it further comprises fixing means (13) intended for fixing a loudspeaker and/or an automatic emergency call system; preferably the fixing means (13) for fixing a loudspeaker and/or an automatic emergency call system comprise at least one locking nut (13).

5. Assembly according to one of claims 3 or 4, of which the plate has an upper face and a lower face, the support (29) comprising a peripheral shoulder (45) rising from the upper face of the plate; preferably, the loudspeaker support (29) is made of a thermoplastic material or of a composite material with a thermoplastic matrix and the peripheral shoulder (45) shows a series of ribs (47) intended for fixing the said loudspeaker support (29) to a dashboard panel (9) by ultrasonic or vibration welding

6. Motor vehicle **characterized in that** it comprises a dashboard with a dashboard panel (9) **characterized in that** the dashboard panel (9) is fixed to a defrosting duct (17) according to one of claims 1 to 2 or to an assembly according to one of claims 3 to 5.

7. Method of mounting a dashboard for a motor vehicle according to claim 6, the method comprising a step of fixing a defrosting duct (17) on a dashboard panel (9); the method being **characterized in that** the defrosting duct (17) is according to one of Claims 1 to 2 and **in that** when the dashboard panel (9) shows an opening facing a loudspeaker bowl (25) carried by said defrosting duct (17), the method comprises a step of fixing a loudspeaker support (29) on said loudspeaker speaker bowl (25) made prior to the step of fixing a defrosting duct (17) on a dashboard panel (9), the step of fixing the defrosting duct (17) on the dashboard panel (9) being made by ultrasonic welding or vibration.

8. Method according to claim 7, **characterized in that** it further comprises a step of fixing an automatic emergency call system and/or a loudspeaker (7) to said loudspeaker support (29) carried out after the step of fixing a defrosting duct (17) to a dashboard panel (9); preferably, it further comprises a step of fixing a loudspeaker grate (11) to said loudspeaker support (29) carried out after the step of fixing an automatic and/or emergency call system a loudspeaker (7) on said loudspeaker support (29).
